# EUROPÄISCHE PATENTSCHRIFT

(11) **EP 3 996 970 B1**
(45) Veröffentlichungstag und Bekanntmachung des Hinweises auf die Patenterteilung: **22.01.2025**
(21) Anmeldenummer: 20739317.4
(22) Anmeldetag: 08.07.2020
(51) Int. Cl.: B62D 1/181

(54) **VERFAHREN ZUM BETREIBEN EINER MOTORISCH VERSTELLBAREN LENKSÄULE UND MOTORISCH VERSTELLBARE LENKSÄULE FÜR EIN KRAFTFAHRZEUG**
METHOD FOR OPERATING A MOTOR-ADJUSTABLE STEERING COLUMN AND MOTOR-ADJUSTABLE STEERING COLUMN FOR A MOTOR VEHICLE
PROCÉDÉ POUR FAIRE FONCTIONNER UNE COLONNE DE DIRECTION À AJUSTEMENT MOTORISÉ, ET COLONNE DE DIRECTION À AJUSTEMENT MOTORISÉ POUR UN VÉHICULE À MOTEUR

(30) Priorität: 12.07.2019 DE 102019004840
(43) Veröffentlichungstag der Anmeldung: 18.05.2022
(73) Patentinhaber: thyssenkrupp Presta AG, 9492 Eschen (LI); thyssenkrupp AG, 45143 Essen (DE)
(72) Erfinder: VITALIS, Daniel, 1096 Budapest (HU); WILLI, Andreas, 6923 Lauterach (AT)
(74) Vertreter: thyssenkrupp Intellectual Property GmbH
(86) Internationale Anmeldenummer: PCT/EP2020/069164
(87) Internationale Veröffentlichungsnummer: WO 2021/008950

(56) Entgegenhaltungen:
- EP-A1- 1 927 526
- DE-A1- 102004 010 805
- DE-A1- 3 532 102
- JP-A- 2000 289 626
- JP-A- H1 170 880
- US-B2- 7 597 357

## Beschreibung

Die Erfindung betrifft ein Verfahren zum Betreiben einer motorisch verstellbaren Lenksäule nach dem Oberbegriff des Anspruchs 1 und eine motorisch verstellbare Lenksäule für ein Kraftfahrzeug nach dem Oberbegriff des Anspruchs 10.

Motorisch verstellbaren Lenksäulen umfassen eine Trageinheit und eine von der Trageinheit getragene Stelleinheit, in der eine Lenkspindel drehbar gelagert ist, und die gegenüber der Trageinheit mittels mindestens eines Verstellantriebs verstellbar ist, wobei die Verstellung in einer Längsrichtung und/oder in der Höherichtung erfolgen kann. Der Verstellantrieb kann selbsthemmend ausgebildet sein, so dass die Lenksäule in der eingestellten Position fixiert bleibt. Der Verstellantrieb umfasst einen Elektromotor, der mit einem Spindeltrieb wirkverbunden ist, so dass dieser die rotatorische Bewegung der Rotorwelle des Elektromotors in eine translatorische Bewegung überführt und dies zu einer Verstellung der Stelleinheit gegenüber der Trageinheit führt. Die Ansteuerung des Elektromotors von elektrisch verstellbaren Lenksäulen erfolgt mittels einer ECU über Halbleiterleiterschalter. Durch das Motordesign oder durch die Ansteuerung mittels ECU wird die Verstellgeschwindigkeit über den Verstellweg vorgegeben.

Die verwendeten Elektromotoren werden üblicherweise mit Drehzahlen betrieben, die eine Geräuschentwicklung im hörbaren Frequenzbereich verursachen. Die Verstellgeschwindigkeit und damit auch die Geräuschentwicklung unterliegt dabei periodischen Frequenzmodulationen, die beispielsweise durch Toleranzabweichungen der im Antriebsstrang des Verstellantriebs verwendeten Bauteile und anderen äußeren Einflüssen verursacht werden. Bereits eine Frequenzmodulation von 2-3 % wird von Kraftfahrzeuginsassen als störend empfunden und hinterlässt einen akustischen Eindruck, der auf eine unzureichende Fertigungsqualität schließen lässt.

Ein Verfahren und eine Lenksäule nach dem Oberbegriff der Ansprüche 1 und 10 ist bekannt aus JP H11 70880 A. JP H11 70880 A beschreibt einen Mechanismus zur Einstellung der Lenkradstellung in einem Fahrzeug. Das Lenkrad kippt automatisch nach oben und bewegt sich nach vorne, um das Ein- und Aussteigen zu erleichtern. Der Mechanismus umfasst einen Drehgeschwindigkeitssensor zur Erfassung einer Drehgeschwindigkeit des Motors und eine Regelvorrichtung mit einer Motorantriebsschaltung, die eine Abweichung zwischen einer voreingestellten Solldrehzahl des Motors und der Istdrehzahl aus dem Sensor berechnet. Bei der Steuerung der Lenkstellungseinstellung wird der Motor auf eine konstante Drehzahl geregelt.

DE 35 32 102 A1 beschreibt ein Steuersystem für die Lage eines Lenkrades. Als Sicherheitssystem wird bei der Einstellung der Lage eines Kipp- sowie Teleskopmechanismus für ein Lenkrad die Geschwindigkeitsänderung in der Lageeinstellung überwacht. Wenn das ermittelte Ergebnis unter einem vorbestimmten Wert ist, wird das als eine Überlastung beurteilt, worauf die Antriebseinrichtung umgekehrt wird. Die Lageinformation wird in vorgegebenen Zeitintervallen mit Hilfe von Potentiometern abgetastet.

DE 10 2004 010 805 A1 beschreibt eine verstellbare Lenksäule für ein Kraftfahrzeug unter Einsatz eines Schrittmotors als Verstellmotor. Das Verstellgetriebe wird mit einer regelbaren Drehzahl angetrieben, die ausschließlich und präzise über die Ansteuerfrequenz des Schrittmotors vorgegeben ist. Das aufgrund der kinematischen Verhältnisse entlang des Verschiebeweges der Lenksäule sich ständig ändernde Übersetzungsverhältnis kann in Abhängigkeit der jeweiligen Position der Lenksäule durch die Drehzahl des Schrittmotors ausgeglichen werden.

Aus JP 2000 289626 A ist ein Mechanismus zur Einstellung der Lenkradstellung in einem Fahrzeug bekannt, der das Betriebsgeräusch beim Anfahren und während des Betriebs verringern kann, wobei die Drehzahl des Motors immer auf eine Solldrehzahl geregelt wird.

US 7 597 357 B2 ein motorisiertes Lenksäulenmodul mit Positionssteuerung mit Hilfe von mindestens einer elektronischen Motorsteuerung bekannt, wobei die Steuerung die Geschwindigkeit des Motors zumindest in der Nähe einer Ausgangsposition und einer Ankunftsposition variiert.

Aus EP 1 927 526 A1 ist ein Verfahren zum Betreiben einer elektrisch verstellbaren Lenksäule bekannt, bei dem eine Geschwindigkeitssteuereinheit einen Geschwindigkeitssteuerbefehl zur Positionseinstellung der Lenksäule ausgibt. Ein Optimalwertsteuerungsmodul bestimmt auf Basis des Geschwindigkeitssteuerbefehls und einer festgelegten Übertragungsfunktion einen Momentensteuerbefehl, mit welchem die Zielgeschwindigkeit erreicht wird. Ferner ist eine Störlast-Schätzeinrichtung vorgesehen, welche eine Störungslast aus einer Abweichung zwischen einem Lastmoment und dem Momentensteuerbefehl bestimmt, mit welcher die Ausgabeseite des Optimalwertsteuerungsmoduls zusätzlich beaufschlagt wird.

EP 1 927 526 A1 beschreibt somit eine Steuerung der Verstellgeschwindigkeit mit einer Störgrößenaufschaltung auf Basis einer geschätzten Störungslast. Nachteilig an diesem Verfahren ist die aufwendige Struktur der Steuerung und die daraus resultierende Trägheit der Steuerung. Durch die vorbekannte Steuerung kann zwar eine verringerte Abhängigkeit der Verstellgeschwindigkeit von einer Anzahl externer Parameter, wie der Versorgungsspannung, der Reibung, der Temperatur oder des Gewichts erreicht werden. Aufgrund der Trägheit der Steuerung ist es aber insbesondere nicht möglich, den zuvor beschriebenen Frequenzmodulationen des Verstellantriebs entgegenzuwirken.

Es ist die Aufgabe der vorliegenden Erfindung, ein Verfahren zum Betreiben einer motorisch verstellbaren Lenksäule und eine motorisch verstellbare Lenksäule für ein Kraftfahrzeug mit einer verbesserten Positionsbestimmung während der Verstellung der Lenksäule anzugeben.

Diese Aufgabe wird gelöst durch ein Verfahren zum Betreiben einer motorisch verstellbaren Lenksäule mit den Merkmalen des Anspruchs 1 und durch eine motorisch verstellbare Lenksäule mit den Merkmalen des Anspruchs 10. Vorteilhafte Weiterbildungen ergeben sich aus den jeweiligen Unteransprüchen.

Hierdurch wird ein Verfahren zum Betreiben einer motorisch verstellbaren Lenksäule für ein Kraftfahrzeug mit einer Trageinheit und einer von der Trageinheit getragenen Stelleinheit, in der eine Lenkspindel drehbar gelagert ist und die gegenüber der Trageinheit mittels mindestens eines Verstellantriebs längs und/oder höhenverstellbar ist, geschaffen, bei dem der Verstellantrieb durch eine Steuereinheit angesteuert wird und auf Grundlage von Messdaten eines Sensors eine durch den Verstellantrieb bewirkte Verstellgeschwindigkeit bestimmt wird. Bei dem erfindungsgemäßen Verfahren ist ferner vorgesehen, dass die Steuereinheit den Verstellantrieb in einem Regelkreis auf Basis einer Regelabweichung zwischen einem vorgebbaren Geschwindigkeitsprofil und der bestimmten Verstellgeschwindigkeit regelt.

Im Sinne der Erfindung ist unter dem Sensor zur Bestimmung der Verstellgeschwindigkeit eine Bestimmungseinheit zu verstehen, die auf eine beliebige Art und Weise die Verstellgeschwindigkeit bestimmt bzw. ermittelt. Dies kann entweder direkt mittels einer Messung der Verstellgeschwindigkeit erfolgen oder indirekt, indem aus anderen ermittelten Werten die Verstellgeschwindigkeit berechnet wird oder auf deren Basis ein Rückschluss auf die Verstellgeschwindigkeit gezogen wird. Beispielsweise kann aus der Drehzahl des Elektromotors auf Grund des bekannten Übersetzungsverhältnisses des Spindeltriebs die Verstellgeschwindigkeit bestimmt werden.

Bevorzugt ist die Stelleinheit gegenüber der Trageinheit längs und/oder höhenverstellbar.

Durch die Regelung der Geschwindigkeit anhand der erfassten Verstellgeschwindigkeit als Eingangsgröße wird die Reaktionszeit der Steuereinheit auf sich verändernde äußere Bedingungen wesentlich verkürzt. Hierdurch wird es möglich, Inkonstanzen in der Regelstrecke wie beispielsweise Ungleichförmigkeiten des Verstellantriebs oder des Verstellsystems auszuregeln. Die Regelstrecke umfasst dabei zumindest eines der folgenden Teile: ein Führungssystem der Lenksäule, die Verbindung zum Lenkungsstrang und/oder den Verstellantrieb umfassend Verstellmotor und Getriebe.

Für die Regelung wird vorzugsweise ein Pl und/oder ein PID Regler eingesetzt. Die Regelparameter des Regelkreises können fest definiert sein. Alternativ können die Regelparameter auch nachgeführt werden, beispielsweise mittels Streckenidentifikation.

Bevorzugt umfasst die motorisch verstellbare Lenksäule einen Elektromotor als Verstellantrieb, wobei besonders bevorzugt jeweils ein Verstellantrieb für die Höhen- und für die Längsverstellung vorgesehen ist. Die Regelung wird bevorzugt für die Längs- und/oder Höhenverstellung angewendet, wobei diese Verstellung gleichzeitig und/oder sequentiell vollzogen wird. Die Ansteuerung des Elektromotors erfolgt bevorzugt mittels Pulsweitenmodulation (PWM).

Vorzugsweise entspricht das Geschwindigkeitsprofil während der Verstellung einer Konstantgeschwindigkeit des Verstellantriebs. Durch diese Wahl des Geschwindigkeitsprofils wird der akustische Eindruck der Lenksäule weiter verbessert, da nicht nur Frequenzmodulationen ausgeregelt werden, sondern auch die Grundfrequenz des Geräusches im Wesentlichen gleichbleibt.

Alternativ kann während der Verstellung wiederholt die Position der verstellbaren Lenksäule bestimmt werden und das Geschwindigkeitsprofil des Verstellantriebs anhand einer positionsabhängigen Geschwindigkeitskennlinie vorgegeben werden. Wenn das Verstellsystem der motorisch verstellbaren Lenksäule, insbesondere für die Höhenverstellung, ein Hebelsystem zur Übertragung der Verstellbewegung von dem Verstellantrieb auf die Stelleinheit umfasst, kann eine konstante Verstellgeschwindigkeit des Verstellantriebs in einer sich stetig verändernden Verstellgeschwindigkeit der Stelleinheit resultieren. Um den Komfort des Fahrzeugführers zu erhöhen, kann eine positionsabhängige Geschwindigkeitskennlinie verwendet werden, die die von dem Verstellsystem verursachte positionsabhängige Veränderung der Verstellgeschwindigkeit der Stelleinheit verringert. Insbesondere kann die positionsabhängige Geschwindigkeitskennlinie eine im Wesentlichen konstante Verstellgeschwindigkeit der Stelleinheit gegenüber der Trageinheit codieren. Unter einer im Wesentlichen konstanten Verstellgeschwindigkeit wird eine maximale Abweichung von ±5% einer gemittelten Verstellgeschwindigkeit verstanden.

Das Geschwindigkeitsprofil weist vorzugsweise zu Beginn der Verstellung eine Anfahrrampe und am Ende der Verstellung eine Stopprampe auf. Durch ein sanftes Anfahr- und Stoppverhalten können Belastungsspitzen und insbesondere auch Klappergeräusche im Verstellsystem reduziert werden. Unter der Anfahrrampe ist eine Beschleunigung zu verstehen. Die Anfahrrampe kann bevorzugt linear oder progressiv oder degressiv ausgebildet sein.

Erfindungsgemäß ist eine Auswerteeinheit vorgesehen, die während der Verstellung mindestens eine Stellgröße des Regelkreises auswertet zur Identifikation von Inkonstanzen in der Regelstrecke des Regelkreises. Aus der Stellgröße des Regelkreises lassen sich Informationen über die Momentanbelastung des Verstellsystems ableiten.

Auf Grundlage der identifizierten Inkonstanzen wird in der Regelstrecke die Position der Lenksäule bestimmt. Beispielsweise ändert sich die erforderliche Stellgröße in Abhängigkeit von der Position der Lenksäule, insbesondere bei Einsatz eines Hebelsystems zur Kraftübertragung des Verstellantriebs. Durch Auswertung der Stellgröße kann somit auf die Position der Lenksäule geschlossen werden. Die Auswertung kann vorzugsweise auch für eine Kollisions- oder eine Verschleißerkennung eingesetzt werden. Bevorzugt ist die Auswerteeinheit dazu ausgebildet, die Ergebnisse der Auswertung an ein Bordsystem zu übermitteln. Die Stellgröße kann beispielsweise ein Spannungssollwert für den Verstellantrieb sein. Unter einer Kollision wird das ungewollte in Kontakt treten mit einem Fremdkörper, wie beispielsweise menschlichen Extremitäten, verstanden.

Die Auswerteeinheit kann darüber hinaus eine Schwellwertüberwachung der zumindest einen Stellgröße durchführen und bei Überschreiten des Schwellwertes eine Abschaltung des Verstellantriebs bewirken. Durch die Abschaltung des Verstellantriebs kann ein wirksamer Einklemmschutz für den Fahrzeugführer sichergestellt werden.

Die Verstellgeschwindigkeit wird vorzugsweise aus der Drehzahl einer von dem Verstellantrieb angetriebenen Welle bestimmt. Insbesondere kann die Drehzahlerfassung unmittelbar an der Abtriebswelle des Verstellantriebs erfolgen. Alternativ kann die Verstellgeschwindigkeit auch durch Erfassung der Bewegung der Stelleinheit bestimmt werden. Die Verstellgeschwindigkeit kann aus der Erfassung einer Absolut- oder Relativposition abgeleitet werden. Als Sensor können beispielweise Magnetsensoren oder induktive Sensoren eingesetzt werden.

Bevorzugt sind zur Bestimmung der Drehzahl ein oder mehrere in Umfangsrichtung um die Welle verteilt angeordnete Sensoreinheiten vorgesehen, die jeweils ein gepulstes Sensorsignal ausgeben, und die Drehzahl wird jeweils anhand einer Periodendauer desjenigen Sensorsignals bestimmt, bei dem zuletzt ein Puls registriert wurde. Bei Verwendung mehrerer Sensoreinheiten wird eine besonders genaue Bestimmung der Geschwindigkeit ermöglicht. Die Verstellgeschwindigkeit wird mehrfach pro Umdrehung der Welle aktualisiert. Da jede Sensoreinheit zur unabhängigen Geschwindigkeitsmessung ausgebildet ist, ist die ermittelte Verstellgeschwindigkeit aber dennoch unabhängig von Positionierungstoleranzen der Sensoreinheiten zueinander.

In einer bevorzugten Ausführungsform wird das Geschwindigkeitsprofil mit einer oder mehreren Störfrequenzen im hörbaren Frequenzbereich beaufschlagt vorgegeben. Durch die bewusste Beaufschlagung des Geschwindigkeitsprofils mit einer oder mehreren Störfrequenzen im hörbaren Bereich kann auf die Geräuschentwicklung des Verstellantriebs Einfluss genommen werden. Durch dieses Sound-Design kann der akustische Eindruck des Verstellsystems optimiert und den Fahrzeuginsassen ein besonders wertiger Eindruck vermittelt werden.

Vorrichtungsmäßig wird die Aufgabe gelöst durch eine motorisch verstellbare Lenksäule für ein Kraftfahrzeug mit einer Trageinheit und einer von der Trageinheit getragenen Stelleinheit. In der Stelleinheit ist eine Lenkspindel der Lenksäule drehbar gelagert und die Stelleinheit ist gegenüber der Trageinheit mittels mindestens eines Verstellantriebs verstellbar. Die Lenksäule umfasst ferner eine Steuereinheit zur Ansteuerung des Verstellantriebs und einen Sensor zur Bestimmung einer Verstellgeschwindigkeit der Stelleinheit. Der Verstellantrieb, der Sensor und die Steuereinheit sind in einen Regelkreis eingebunden zur Regelung des Verstellantriebs basierend auf einer Regelabweichung zwischen einem vorgebbaren Geschwindigkeitsprofil und der bestimmten Verstellgeschwindigkeit. Die Lenksäule kann insbesondere dazu ausgebildet sein, das vorbeschriebene Verfahren auszuführen.

Weitere Ausgestaltungen der Erfindung sind der nachfolgenden Beschreibung zu entnehmen.

Die Erfindung wird nachstehend anhand der in den beigefügten Abbildungen dargestellten Ausführungsbeispiele näher erläutert.
- Figur 1: zeigt schematisch eine perspektivische Ansicht einer erfindungsgemäßen motorisch verstellbaren Lenksäule,
- Figur 2: zeigt schematisch eine weitere perspektivische Ansicht der erfindungsgemäßen Lenksäule gemäß Figur 1 aus einem anderen Betrachtungswinkel,
- Figur 3: zeigt schematisch den Aufbau der Steuereinheit der erfindungsgemäßen Lenksäule nach Figur 1 und 2,
- Figur 4: zeigt schematisch ein Blockschaltbild des Regelkreises der erfindungsgemäßen Lenksäule nach Figur 1 und 2.

In den verschiedenen Figuren sind gleiche Teile stets mit den gleichen Bezugszeichen versehen und werden daher in der Regel auch jeweils nur einmal benannt bzw. erwähnt.

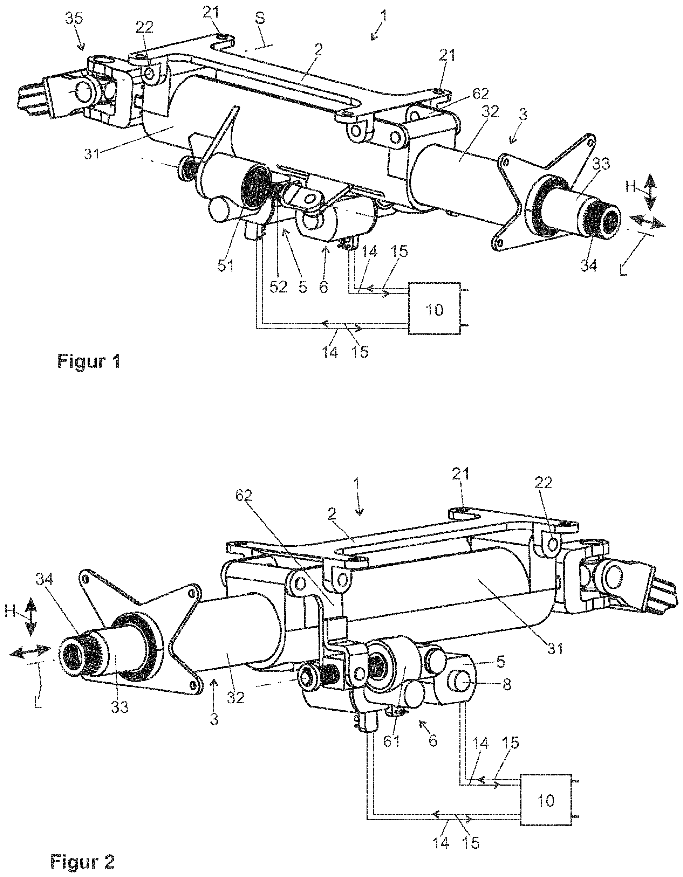

Figur 1 zeigt eine erfindungsgemäße Lenksäule 1 in einer schematischen perspektivischen Ansicht von schräg oben links auf das hintere Ende, bezogen auf die Fahrtrichtung eines nicht dargestellten Fahrzeugs, wo ein hier nicht dargestelltes Lenkrad im Bedienungsbereich gehalten wird. Figur 2 zeigt die Lenksäule 1 in einer Ansicht von der gegenüberliegenden Seite, also von unten rechts gesehen.

Die Lenksäule 1 umfasst eine Trageinheit 2, welche als Konsole ausgebildet ist, die Befestigungsbohrungen 21 aufweist zur Anbringung an einer nicht dargestellten Fahrzeug-Karosserie. Von der Trageinheit 2 wird eine Stelleinheit 3 unter Zwischenschaltung einer Manteleinheit 31 gehalten, die in der Manteleinheit 31 teleskopierbar angeordnet ist. Die Stelleinheit 3 umfasst ein Mantelrohr 32 und eine Lenkspindel 33, die um eine Längsachse L drehbar in dem Mantelrohr 32 gelagert. Am hinteren Ende der Lenkspindel 33 ist ein Befestigungsabschnitt 34 ausgebildet, an dem ein nicht dargestelltes Lenkrad anbringbar ist. Am vorderen Ende ist die Lenkspindel 33 mit einer Gabel eines Universalgelenks 35 drehmomentschlüssig verbunden.

Die Stelleinheit 3 ist gegenüber der Trageinheit 2 mittels zweier Verstellantriebe 5, 6 längs und höhenverstellbar, wie durch die Doppelpfeile L und H angedeutet ist. Dazu ist der Verstellantrieb 5 für die Längsverstellung über ein Getriebe mit einer Spindelmutter 51 gekoppelt. Die Spindelmutter 51 steht mit einer Gewindespindel 52 in Eingriff, die mit dem Mantelrohr 32 gekoppelt ist und dieses bei Antrieb der Spindelmutter 51 in Längsrichtung L verschiebt.

Der Verstellantrieb 6 für die Höhenverstellung betätigt über einen zweiten Gewindetrieb 61 einen drehbaren Stellhebel 62 an, der die Manteleinheit 31 mit der Trageinheit 2 verbindet. Bei Betätigung des Stellhebels 62 wird die Stelleinheit 3 daher gegenüber der Trageinheit um eine durch ein Schwenklager 22 definierte horizontale Schwenkachse S verschwenkt und dadurch in der Höhe verstellt. Durch die Verwendung eines Hebelsystems zur Kraftübertragung ist die resultierende Verstellgeschwindigkeit der Stelleinheit 31 bei gleichbleibender Antriebsgeschwindigkeit des Verstellantriebs 6 abhängig von der jeweiligen Position der Stelleinheit 31.

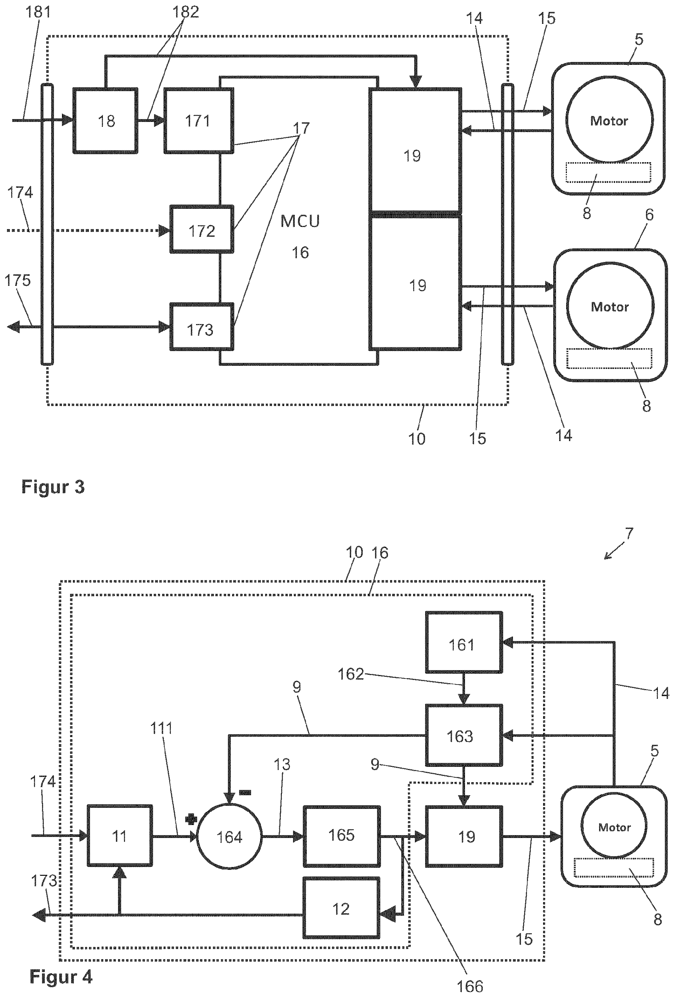

In Figur 3 ist schematisch der Aufbau der Steuereinheit 10 der erfindungsgemäßen Lenksäule nach Figur 1 und 2 gezeigt. Die Steuereinheit 10 enthält eine MCU (Micro-Control-Unit) 16 und MDUs (Motor-Treiber-Einheiten) 19 zur Ansteuerung der Verstellantriebe 5, 6. Zur Ansteuerung der Verstellantriebe gibt die MDU 19 Befehlswerte 15 an den jeweiligen Verstellantrieb 5, 6 aus. Mittels Sensoren 8, also zumindest ein Sensor 8 je Verstellantrieb, wird eine durch den jeweiligen Verstellantrieb 5, 6 bewirkte Verstellgeschwindigkeit bestimmt, wozu der Sensor 8 ein Sensorsignal 14 ausgibt. In dem dargestellten Ausführungsbeispiel sind die Sensoren 8 innerhalb des Verstellantriebs 5, 6 als Rotorpositionssensoren angeordnet. Denkbar ist aber auch die Bestimmung der Verstellgeschwindigkeit 9 an jedem anderen von dem Verstellantrieb 5, 6 angetriebenen Bauteil, insbesondere jeder angetriebenen Welle. Ebenfalls beispielhaft ist in Figur 3 vorgesehen, dass die MDUs 19 eine Sensorschnittstelle als Eingang für das Sensorsignal 14 aufweisen. Das Sensorsignal 14 kann alternativ auch über einen weiteren Eingang unmittelbar an die MCU 16 übermittelt werden.

Gemäß dem Ausführungsbeispiel von Figur 3 weist die MCU 16 drei Schnittstellen 17 auf: Eine Stromversorgungsschnittstelle 171, einen Schalteingang 172 und eine Bus-Schnittstelle 173. Die Stromversorgungsschnittstelle 171 ist über einen Netzfilter 18 an eine Netzspannung 181, beispielsweise ein Fahrzeug-Bordnetz, angeschlossen. Der Netzfilter 18 stellt eine entstörte und/oder gepufferte Spannung 182 an der Stromversorgungsschnittstelle 171 und für die MDUs 19 bereit.

Der Schalteingang 172 ist vorzugsweise mit einem (nicht dargestellten) Schaltelement, beispielsweise einem Wipp- oder Joystick-Schalter, Taster oder dergleichen, verbunden, der ein Schaltsignal 174 bereitstellt. Über das Schaltelement kann die Verstellung der Stelleinheit in Längs- und/oder Höhenrichtung vom Fahrzeugführer bewirkt werden.

Die Bus-Schnittstelle 173 dient der Anbindung der verstellbaren Lenksäule an einen Fahrzeugbus, beispielsweise einen CAN-Bus oder LIN-Bus, über eine Signalleitung 175. Durch Anbindung an einen Fahrzeugbus können bidirektional Informationen ausgetauscht werden. Beispielsweise kann eine automatische Verstellung der Lenksäule in bestimmten Fahrsituationen bewirkt werden. So kann beispielsweise der Ausstieg bei ausgeschalteter Zündung oder auch im Falle eines Unfalls erleichtert werden. Weiter kann es vorgesehen sein, das die Stelleinheit in eine voll zurückgezogene Position (Verstauposition) überführt wird, wenn das Fahrzeug in einem autonomen Fahrmodus betrieben wird. Weiterhin können über die Bus-Schnittstelle 173 Diagnoseinformationen der Steuereinheit 10 an die Fahrzeugsteuerung ausgegeben werden oder in einer Speichereinheit abgespeichert werden.

Figur 4 zeigt schematisch ein Blockschaltbild des Regelkreises der erfindungsgemäßen Lenksäule nach Figur 1 und 2. In der MCU 16 ist ein Geschwindigkeitsprofil 11 hinterlegt, das in Abhängigkeit von dem Schaltsignal 174 und/oder einem über die Signalleitung 175 empfangenen Befehl einen Geschwindigkeits-Sollwert als Führungsgröße 111 vorgibt. Im Differenzierer 164 wird eine Regelabweichung 13 als Differenz der Führungsgröße 111 und der gemessenen Verstellgeschwindigkeit 9 bestimmt und an einen Regler 165 weitergegeben. Der Regler 165 gibt eine Stellgröße 166, beispielsweise eine Motorspannung, aus. Die Stellgröße 166 wird zur Bestimmung eines PWM-Signals und zur anschließenden Ansteuerung des Verstellantriebs 5 mittels eines Befehlswertes 15 an die MDU 19 weitergegeben. In einer alternativen Ausführungsform kann die Bestimmung des PWM-Signals in einem separaten Verarbeitungsschritt innerhalb der MCU 16 erfolgen.

Wie in Figur 4 gezeigt, ist eine Auswerteeinheit 12 vorgesehen, die während der Verstellung die Stellgröße 166 des Regelkreises 7 zur Identifikation von Inkonstanzen in der Regelstrecke auswertet. Die Auswerteeinheit 12 kann einen Ausgang aufweisen, um Auswerteergebnisse an die Bus-Schnittstelle 173 oder zur Berücksichtigung im Geschwindigkeitsprofil 11 auszugeben. Die Auswerteeinheit ist dazu ausgebildet, die Position der Lenksäule 1 auf Grundlage der identifizierten Inkonstanzen in der Regelstrecke zu bestimmen. Auch kann die Auswerteeinheit 12 eine Schwellwertüberwachung der Stellgröße 166 durchführen und bei Überschreiten des Schwellwertes eine Abschaltung des Verstellantriebs 5 bewirken. So können Sicherheitsfunktionen wie eine Kollisionserkennung, der auch einen Einklemmschutz umfassen kann, implementiert werden.

Der Sensor 8 gibt ein vorzugsweise gepulstes Sensorsignal 14 aus, dass einem Timer 161 und einem Geschwindigkeitsberechnungsmodul 163 zur Verfügung gestellt wird. Der Timer 161 ist zur Bestimmung einer Periodendauer des Sensorsignals 14 ausgebildet, beispielsweise durch Flankenerkennung eines gepulsten Sensorsignals. Die bestimmte Periodendauer wird in Form eines Zeitsignales 162 an das Geschwindigkeitsberechnungsmodul 163 übermittelt. Das Geschwindigkeitsberechnungsmodul 163 berechnet aus dem Zeitsignal 162 und der zugehörigen Positionsänderung gemäß dem Sensorsignal 14 die Verstellgeschwindigkeit 9, die an den Differenzierer 164 übermittelt wird. Die berechnete Verstellgeschwindigkeit 9 wird zusätzlich an die MDU 19 zur Bestimmung des PWM-Signals übermittelt.

Obwohl in Figur 4 beispielhaft auf den Verstellantrieb 5 zur Längsverstellung der Lenksäule 1 Bezug genommen wird, gelten die vorstehenden Ausführungen entsprechend für den Verstellantrieb 6 zur Höhenverstellung der Lenksäule 1.

### Bezugszeichenliste

- 1: Lenksäule
- 2: Trageinheit
- 21: Befestigungsbohrungen
- 22: Schwenklager
- 3: Stelleinheit
- 31: Manteleinheit
- 32: Mantelrohr
- 33: Lenkspindel
- 34: Befestigungsabschnitt
- 5: Verstellantrieb
- 51: Spindelmutter
- 52: Gewindespindel
- 6: Verstellantrieb
- 61: Gewindetrieb
- 62: Stellhebel
- 7: Regelkreis
- 8: Sensor
- 9: Verstellgeschwindigkeit
- 10: Steuereinheit
- 11: Geschwindigkeitsprofil
- 111: Führungsgröße
- 12: Auswerteeinheit
- 13: Regelabweichung
- 14: Sensorsignal
- 15: Befehlswert
- 16: MCU
- 161: Timer
- 162: Zeitsignal
- 163: Geschwindigkeitsberechnungsmodul
- 164: Differenzierer
- 165: Regler
- 166: Stellgröße
- 17: Schnittstellen
- 171: Stromversorgungsschnittstelle
- 172: Schalteingang
- 173: Bus-Schnittstelle
- 174: Schaltsignal
- 175: Signalleitung
- 18: Netzfilter
- 181: Netzspannung
- 182: entstörte Spannung
- 19: MDU
- S: Schwenkachse
- L: Längsrichtung
- H: Höherichtung

## Patentansprüche

1. Verfahren zum Betreiben einer motorisch verstellbaren Lenksäule (1) für ein Kraftfahrzeug, mit einer Trageinheit (2) und einer von der Trageinheit (2) getragenen Stelleinheit (3), in der eine Lenkspindel (33) drehbar gelagert ist, und die gegenüber der Trageinheit (2) mittels mindestens eines Verstellantriebs (5, 6) verstellbar ist, wobei der Verstellantrieb (5, 6) durch eine Steuereinheit (10) angesteuert wird und auf Grundlage von Messdaten eines Sensors (8) eine durch den Verstellantrieb (5, 6) bewirkte Verstellgeschwindigkeit (9) bestimmt wird, wobei die Steuereinheit (10) den Verstellantrieb (5, 6) in einem Regelkreis (7) auf Basis einer Regelabweichung (13) zwischen einem vorgebbaren Geschwindigkeitsprofil (11) und der bestimmten Verstellgeschwindigkeit (9) regelt, **dadurch gekennzeichnet, dass** eine Auswerteeinheit (12) vorgesehen ist, die während der Verstellung mindestens eine Stellgröße (13, 166) des Regelkreises (7) auswertet zur Identifikation von Inkonstanzen in der Regelstrecke des Regelkreises (7) und die Position der Lenksäule (1) auf Grundlage der identifizierten Inkonstanzen in der Regelstrecke bestimmt wird.

2. Verfahren nach Anspruch 1, **dadurch gekennzeichnet, dass** das Geschwindigkeitsprofil (11) während der Verstellung einer Konstantgeschwindigkeit des Verstellantriebs (5, 6) entspricht.

3. Verfahren nach Anspruch 1, **dadurch gekennzeichnet, dass** während der Verstellung wiederholt die Position der verstellbaren Lenksäule (1) bestimmt wird und das Geschwindigkeitsprofil (11) des Verstellantriebs (5, 6) anhand einer positionsabhängigen Geschwindigkeitskennlinie vorgegeben wird.

4. Verfahren nach Anspruch 3, **dadurch gekennzeichnet, dass** die positionsabhängige Geschwindigkeitskennlinie eine im Wesentlichen konstante Verstellgeschwindigkeit (9) der Stelleinheit (3) gegenüber der Trageinheit (2) codiert.

5. Verfahren nach einem der Ansprüche 1 bis 4, **dadurch gekennzeichnet, dass** das Geschwindigkeitsprofil (11) zu Beginn der Verstellung eine Anfahrrampe und am Ende der Verstellung eine Stopprampe aufweist.

6. Verfahren nach einem der Ansprüche 1 bis 5, **dadurch gekennzeichnet, dass** die Auswerteeinheit (12) eine Schwellwertüberwachung der zumindest einen Stellgröße (13, 166) durchführt und bei Überschreiten des Schwellwertes eine Abschaltung des Verstellantriebs (5, 6) bewirkt.

7. Verfahren nach einem der Ansprüche 1 bis 6, **dadurch gekennzeichnet, dass** die Verstellgeschwindigkeit (9) aus der Drehzahl einer von dem Verstellantrieb (5, 6) angetriebenen Welle bestimmt wird.

8. Verfahren nach Anspruch 7, **dadurch gekennzeichnet, dass** zur Bestimmung der Drehzahl ein oder mehrere in Umfangsrichtung um die Welle verteilt angeordnete Sensoreinheiten vorgesehen sind, die jeweils ein gepulstes Sensorsignal (14) ausgeben, und die Drehzahl jeweils anhand einer Periodendauer desjenigen Sensorsignals bestimmt wird, bei dem zuletzt ein Puls registriert wurde.

9. Verfahren nach einem der Ansprüche 1 bis 8, **dadurch gekennzeichnet, dass** das Geschwindigkeitsprofil (11) mit einer oder mehreren Störfrequenzen im hörbaren Frequenzbereich beaufschlagt vorgegeben wird.

10. Motorisch verstellbare Lenksäule für ein Kraftfahrzeug mit einer Trageinheit (2), einer von der Trageinheit (2) getragenen Stelleinheit (3), in der eine Lenkspindel (33) der Lenksäule (1) drehbar gelagert ist und die gegenüber der Trageinheit (2) mittels mindestens eines Verstellantriebs (5, 6) verstellbar ist, einer Steuereinheit (10) zur Ansteuerung des Verstellantriebs (5, 6) und mit einem Sensor (8) zur Bestimmung einer Verstellgeschwindigkeit (9) der Stelleinheit (3), wobei der Verstellantrieb (5, 6), der Sensor (8) und die Steuereinheit (10) in einen Regelkreis (7) eingebunden sind zur Regelung des Verstellantriebs (5, 6) basierend auf einer Regelabweichung (13) zwischen einem vorgebbaren Geschwindigkeitsprofil (11) und der bestimmten Verstellgeschwindigkeit (9), **dadurch gekennzeichnet, dass** die Lenksäule zur Ausführung des Verfahrens nach einem der Ansprüche 1 bis 9 ausgebildet ist.

## Claims

1. A method for operating a motor-adjustable steering column (1) for a motor vehicle, with a supporting unit (2) and an actuating unit (3) supported by the supporting unit (2), in which a steering spindle (33) is rotatably supported, and which is adjustable relative to the supporting unit (2) by means of at least one adjustment drive (5, 6), wherein the adjustment drive (5, 6) is controlled by a control unit (10) and an adjustment speed (9) caused by the adjustment drive (5, 6) is determined on the basis of measurement data of a sensor (8), wherein, the control unit (10) controls the adjustment speed (5, 6) in a control loop (7) on the basis of a control deviation (13) between a specifiable speed profile (11) and the determined adjustment speed (9), **characterized in that** an evaluation unit (12) is provided which evaluates during the adjustment at least one manipulated variable (13, 166) of the control loop (7) for the identification of inconsistencies in the controlled system of the control loop (7) and the position of the steering column (1) is determined on the basis of the identified inconsistencies in the controlled system.

2. The method as claimed in claim 1, **characterized in that** the speed profile (11) during the adjustment corresponds to a constant speed of the adjustment drive (5, 6).

3. The method as claimed in claim 1, **characterized in that** during the adjustment the position of the adjustable steering column (1) is repeatedly determined and the speed profile (11) of the adjustment drive (5, 6) is specified on the basis of a position-dependent speed characteristic.

4. The method as claimed in claim 3, **characterized in that** the position-dependent speed characteristic encodes an essentially constant adjustment speed (9) of the actuating unit (3) relative to the supporting unit (2).

5. The method as claimed in any one of claims 1 to 4, **characterized in that** the speed profile (11) has a starting ramp at the beginning of the adjustment and a stopping ramp at the end of the adjustment.

6. The method as claimed in any one of claims 1 to 5, **characterized in that** the evaluation unit (12) carries out a threshold value monitoring of at least one manipulated variable (13, 166) and causes a shutdown of the adjustment drive (5, 6) when the threshold value is exceeded.

7. The method as claimed in any one of claims 1 to 6, **characterized in that** the adjustment speed (9) is determined from the revolution rate of a shaft driven by the adjustment drive (5, 6).

8. The method as claimed in claim 7, **characterized in that** for the determination of the revolution rate one or more sensor units distributed in the circumferential direction around the shaft are provided, each of which outputs a pulsed sensor signal (14), and the revolution rate is determined in each case on the basis of a period duration of the sensor signal in which a pulse was last registered.

9. The method as claimed in any one of claims 1 to 8, **characterized in that** the speed profile (11) is specified with one or more interference frequencies in the audible frequency range.

10. A motor-adjustable steering column for a motor vehicle with a supporting unit (2), an actuating unit (3) supported by the supporting unit (2), in which a steering spindle (33) of the steering column (1) is rotatably supported and which is adjustable relative to the supporting unit (2) by means of at least one adjustment drive (5, 6), a control unit (10) for controlling the adjustment drive (5, 6) and with a sensor (8) for determining an adjustment speed (9) of the actuating unit (3), wherein the adjustment drive (5, 6), the sensor (8) and the control unit (10) are integrated into a control loop (7) for the control of the adjustment drive (5, 6) based on a control deviation (13) between a specifiable speed profile (11) and the determined adjustment speed (9), **characterized in that** the steering column is configured for carrying out the method as claimed in any one of claims 1 to 9.

## Revendications

1. Procédé de fonctionnement d'une colonne de direction réglable par moteur (1) pour un véhicule à moteur, avec une unité de support (2) et une unité d'actionnement (3) supportée par l'unité de support (2), dans laquelle un axe de direction (33) est supporté de manière rotative, et qui est réglable par rapport à l'unité de support (2) au moyen d'au moins un entraînement de réglage (5, 6), et qui est réglable par rapport à l'unité de support (2) au moyen d'au moins un entraînement de réglage (5, 6), dans lequel l'entraînement de réglage (5, 6) est commandé par une unité de commande (10) et une vitesse de réglage (9) causée par l'entraînement de réglage (5, 6) est déterminée sur la base des données de mesure d'un capteur (8), dans lequel, l'unité de commande (10) commande la vitesse de réglage (5, 6) dans une boucle de commande (7) sur la base d'un écart de réglage (13) entre un profil de vitesse spécifiable (11) et la vitesse de réglage déterminée (9), **caractérisé en ce qu'une** unité d'évaluation (12) est prévue pour évaluer pendant le réglage au moins une variable manipulée (13, 166) de la boucle de commande (7) pour identifier les incohérences dans le système de commande de la boucle de commande (7) et la position de la colonne de direction (1) est déterminée sur la base des incohérences identifiées dans le système de commande.

2. Procédé selon la revendication 1, **caractérisé en ce que** le profil de vitesse (11) pendant le réglage correspond à une vitesse constante de l'entraînement de réglage (5, 6).

3. Procédé selon la revendication 1, **caractérisé en ce que** pendant le réglage, la position de la colonne de direction réglable (1) est déterminée à plusieurs reprises et que le profil de vitesse (11) de l'entraînement de réglage (5, 6) est spécifié sur la base d'une caractéristique de vitesse dépendant de la position.

4. Procédé selon la revendication 3, **caractérisé en ce que** la caractéristique de vitesse dépendant de la position code une vitesse de réglage (9) essentiellement constante de l'unité d'actionnement (3) par rapport à l'unité de support (2).

5. Procédé selon l'une des revendications 1 à 4, **caractérisé en ce que** le profil de vitesse (11) comporte une rampe de démarrage au début du réglage et une rampe d'arrêt à la fin du réglage.

6. Procédé selon l'une des revendications 1 à 5, **caractérisé en ce que** l'unité d'évaluation (12) effectue une surveillance de la valeur seuil d'au moins une variable manipulée (13, 166) et provoque l'arrêt de l'entraînement de réglage (5, 6) en cas de dépassement de la valeur seuil.

7. Procédé selon l'une des revendications 1 à 6, **caractérisé en ce que** la vitesse de réglage (9) est déterminée à partir de la vitesse de rotation d'un arbre entraîné par l'entraînement de réglage (5, 6).

8. Procédé selon la revendication 7, **caractérisée en ce que** pour la détermination de la vitesse de rotation, une ou plusieurs unités de capteurs réparties dans la direction circonférentielle autour de l'arbre sont fournies, chacune émettant un signal de capteur pulsé (14), et la vitesse de rotation est déterminée dans chaque cas sur la base d'une durée de période du signal de capteur dans laquelle une impulsion a été enregistrée pour la dernière fois.

9. Procédé selon l'une des revendications 1 à 8, **caractérisé en ce que** le profil de vitesse (11) est spécifié avec une ou plusieurs fréquences d'interférence dans la gamme des fréquences audibles.

10. Colonne de direction réglable par moteur pour un véhicule à moteur avec une unité de support (2), une unité d'actionnement (3) supportée par l'unité de support (2), dans laquelle un axe de direction (33) de la colonne de direction (1) est supporté de manière rotative et qui est réglable par rapport à l'unité de support (2) au moyen d'au moins un entraînement de réglage (5, 6), une unité de commande (10) pour la commande de l'entraînement de réglage (5, 6) et avec un capteur (8) pour déterminer une vitesse de réglage (9) de l'unité d'actionnement (3), dans lequel l'entraînement de réglage (5, 6), le capteur (8) et l'unité de commande (10) sont intégrés dans une boucle de commande (7) pour la commande de l'entraînement de réglage (5, 6) sur la base d'un écart de commande (13) entre un profil de vitesse spécifiable (11) et la vitesse de réglage déterminée (9), **caractérisé en ce que** la colonne de direction est configurée pour la mise en œuvre du procédé selon l'une quelconque des revendications 1 à 9.
